Europäisches Patentamt

European Patent Office

Office européen des brevets

(19)

(11) Numéro de publication: **0 222 671 B1**

## (12) FASCICULE DE BREVET EUROPEEN

(45) Date de publication de fascicule du brevet:
20.03.91

(51) Int. Cl.5: **C25B 13/04, H01M 2/16**

(21) Numéro de dépôt: 86420237.9

(22) Date de dépôt: **18.09.86**

(54) Matériau microporeux, procédé pour son obtention, et applications notamment à la réalisation d'éléments cathodiques.

(30) Priorité: 27.09.85 FR 8514327

(43) Date de publication de la demande:
20.05.87 Bulletin 87/21

(45) Mention de la délivrance du brevet:
20.03.91 Bulletin 91/12

(84) Etats contractants désignés:
AT BE CH DE FR GB IT LI LU NL SE

(56) Documents cités:
EP-A- 0 040 826      FR-A- 2 314 214
FR-A- 2 443 479      GB-A- 2 005 289
GB-A- 2 080 352      US-A- 2 155 016
US-A- 4 085 241      US-A- 4 167 469

(73) Titulaire: **RHONE-POULENC CHIMIE**
**25, quai Paul Doumer**
**F-92408 Courbevoie Cédex(FR)**

(72) Inventeur: **Bachot, Jean**
**9, rue Rogert Thorelle**
**F-92340 Bourg-la-Reine(FR)**
Inventeur: **Kiefer, Jean-Claude Le Grand Cail-**
**louet**
**1 Impasse des Edelweiss Blaincourt-**
**Les-Precy**
**F-60460 Precy-sur-Oise(FR)**

(74) Mandataire: **Varnière-Grange, Monique et al**
**RHONE-POULENC INTERSERVICES Service**
**Brevets Chimie Centre de Recherches de**
**Saint-Fons B.P. 62**
**F-69192 Saint-Fons Cédex(FR)**

EP 0 222 671 B1

Rank Xerox (UK) Business Services

## Description

La présente invention a pour objet un procédé d'obtention d'un microporeux comprenant un empilement de fibres, renfermant un liant à base de latex.

Le matériau ou élément microporeux en cause peut en particulier être utilisé dans la fabrication d'électrodes volumiques et de séparateurs microporeux tels que, des diaphragmes utilisés en électrolyse.

On sait que, d'une manière générale, ces éléments microporeux doivent satisfaire plusieurs exigences :

- ils doivent présenter une microporosité contrôlée en taille des pores et en distribution de la taille des pores ;
- lorsqu'on les utilise dans la réalisation de l'élément cathodique d'une cellule d'électrolyse du chlorure de sodium, leur épaisseur doit être faible : de l'ordre de 0,1mm à 5 mm, alors qu'ils doivent présenter une surface importante qui peut dépasser plusieurs m².

De plus, ces matériaux microporeux doivent pouvoir être obtenus par dépôt sur une structure rigide qui présente des taux d'ouverture importants.

Ces matériaux microporeux sont obtenus généralement par filtration sous vide d'une suspension de fibres et de liants.

Une difficulté de ce mode de préparation réside dans le fait qu'une partie importante du liant est amenée sous forme de latex qui est éliminé lors de l'opération de filtration.

Il en résulte non seulement une perte de liant, mais encore un mauvais contrôle de la quantité retenue, donc de la consolidation et finalement des caractéristiques des matériaux microporeux.

Afin d'obtenir la microporosité desdits matériaux, on a déjà préconisé comme agents porogènes de nombreuses charges telles que alcalines ou alcalino-terreuses comme les halogénures, sulfates, sulfites, bisulfites, phosphates, carbonates, bicarbonates, alumine amphotère ou silice. Ces agents porogènes sont éliminés, au moins en partie, selon leur nature chimique par un milieu acide ou alcalin.

Malheureusement, ces agents porogènes doivent être considérés comme des facteurs de déconsolidation des matériaux microporeux d'un point de vue mécanique.

Ainsi, la demande de brevet français n° 2,314,214 propose de renforcer, au moyen d'une toile ou nappe en fibres d'amiante disposée sur la face anodique, un diaphragme poreux en amiante déposé et consolidé par une résine fluorée. Ledit diaphragme est fabriqué par un procédé selon lequel on forme une suspension homogène et stable, en ajoutant à une suspension de fibres d'amiante dans l'eau, en présence d'un agent surfactif anionique sulfonique un latex de résine fluorée et un agent porophore, on met cette suspension en forme par filtration, on la sèche, on la fritte à une température supérieure au point de fusion, à l'état cristallin, de la résine fluorée, et on élimine le porophore par décomposition.

En pratique le porophore recommandé est le carbonate de calcium.

Or maintenant, on a trouvé, et c'est ce qui fait l'objet de la présente invention, qu'il pouvait être pallié aux inconvénients de l'art antérieur en faisant appel, comme agents de formation du réseau de latex, à des dérivés à base de silice.

La présente invention a donc pour objet un procédé d'obtention d'un matériau microporeux qui comprend la consolidation d'une structure fibreuse avec un liant à base d'un latex comprenant des particules d'un polymère fluoré et d'un dérivé à base de silice précipitée ou de combustion ayant une surface spécifique BET comprise entre 100 et 300 m2/g et une granulométrie comprise entre 1 et 50 micromètres pour développer le réseau dudit liant à base de latex.

Les silices selon l'invention présentent une surface spécifique BET comprise entre 100 m² et 300 m²/g, et une granulométrie évaluée au compteur COULTER entre 1 et 50 $\mu$m et, de préférence, entre 1 et 15 $\mu$m.

De plus, on a observé que ces dérivés se comportent comme d'excellents agents porogènes n'apportant pratiquement pas de déconsolidation du matériau microporeux. Ces dérivés peuvent être éliminés facilement par attaque en milieu alcalin à la différence d'autres porogènes tels que l'alumine.

On a en particulier observé de manière inattendue que, dans le cas ou de tels matériaux microporeux comportent une structure fibreuse consolidée par un liant à base de latex, la rétention des particules formant le latex est pratiquement complète.

Le liant des matériaux microporeux conforme à l'invention est constitué par un polymère fluoré.

L'expression "polymère fluoré" désigne présentement un homopolymère ou un copolymère dérivés au moins en partie de monomères oléfiniques substitués par des atomes de fluor, ou substitués par une combinaison d'atomes de fluor et de l'un au moins des atomes de chlore, brome ou iode par monomère.

Des exemples d'homopolymères ou copolymères fluorés peuvent être constitués par les polymères et copolymères dérivés de tétrafluoroéthylène, hexafluoropropylène, chlorotrifluoroéthylène, bromotrifluoroéthylène.

De tels polymères fluorés peuvent aussi contenir jusqu'a 75 moles pour cent de motifs dérivés d'autres monomères éthyléniquement insaturés contenant au moins autant d'atomes de fluor que d'atomes de carbone, comme par exemple le (di)fluorure de vinylidène, les esters de vinyle et de perfluoroalkyle, tel que le perfluoroalcoxyéthylène.

On peut naturellement utiliser dans l'invention plusieurs homopolymères ou copolymères fluorés tels que définis ci-avant. Il va sans dire qu'on ne sortirait pas du cadre de l'invention en associant à ces polymères fluorés une faible quantité, par exemple jusqu'à 10 ou 15 % en poids de polymères dont la molécule ne renferme pas d'atomes de fluor, comme par exemple du polypropylène.

Le polymère fluoré peut représenter jusqu'à 60 % du poids total de la nappe, ce taux étant plus généralement compris entre 5 et 50 %.

Le polymère fluoré, selon l'invention, se présente avantageusement sous forme d'une dispersion aqueuse (latex) renfermant, en général, de 30 à 70 % de polymère sec, de granulométrie comprise entre 0,1 et 5 micromètres et de préférence entre 0,1 et 1 micromètre.

Le matériau microporeux présente une structure fibreuse, comme dit précédemment, comprenant des fibres conductrices ou non conductrices au sens de l'invention. On mentionnera notamment les fibres minérales telles que les fibres d'amiante, les fibres de zircone, ou les fibres organiques telles que les fibres de polypropylène ou de polyéthylène, éventuellement halogéné et notamment fluoré, les fibres de polyhalogénovinylidène et notamment de polyfluorure de vinylidène ou encore les fibres des polymères fluorés.

On désignera présentement par fibres conductrices de l'électricité tout matériau sous forme de filament dont la diamètre est généralement inférieur à 1 mm et, de préférence, compris entre $10^{-5}$ et 0,1 mm et dont la longueur est supérieure à 0,1 mm et, de préférence, comprise entre 1 et 20 mm, ledit matériau présentant une résistivité égale ou inférieure à 0,4 ohm.cm.

De telles fibres peuvent être entièrement constituées par un matériau intrinsèquement conducteur de l'électricité ; à titre d'exemples de tels matériaux on peut citer les fibres métalliques, en particulier les fibres de fer, d'alliages ferreux ou de nickel ou les fibres de carbone.

Avantageusement, ces fibres sont constituées par des fibres de carbone présentant une distribution monodisperse de leurs longueurs.

Par distribution monodisperse on entend une distribution des longueurs telles que la longueur d'au moins 80 %, et avantageusement 90 % des fibres correspond à celle de la longueur moyenne des fibres à plus ou moins 20 % près et avantageusement à plus ou moins 10 % près.

On peut également utiliser des fibres issues de matériau non conducteur de l'électricité mais rendues conductrices par un traitement : on peut à titre d'exemple citer les fibres d'amiante, rendues conductrices par dépôt chimique ou électrochimique d'un métal tel que nickel, ou les fibres de zircone ($ZrO_2$), rendues conductrices par traitement, on effectuera celui-ci dans des conditions telles que la fibre en résultant présente la résistivité mentionnée ci-avant.

Il va sans dire qu'on peut associer dans les matériaux microporeux conformes à l'invention deux types de fibres ; les fibres intrinsèquement conductrices et les fibres rendues conductrices.

Les matériaux microporeux en cause sont particulièrement avantageux dans le cas d'obtention d'un élément cathodique comprenant une structure rigide conductrice de l'électricité sur laquelle est déposé au moins un matériau microporeux. On peut en particulier fabriquer une électrode volumique. Par "électrode volumique " on entendra un support rigide métallique dont la fonction est seulement d'amener l'électricité, et un élément microporeux conducteur qui remplit la fonction cathodique.

Le matériau microporeux en cause peut également être utilisé comme simple diaphragme. Dans ce cas, cet élément ne comprend pas de fibres conductrices.

Enfin, cet élément microporeux non conducteur peut être directement couplé à une cathode volumique, jouant le rôle de précathode intégrée.

Un avantage de la présente invention réside dans la formation du matériau microporeux sur un substrat rigide.

Ce substrat rigide peut être constitué par une cathode élémentaire présentant une ou plusieurs surfaces planes ou en forme de cylindres "doigt de gant" présentant une surface ouverte.

Selon l'invention, le matériau microporeux est formé directement par dépôt sur une structure rigide ouverte d'une suspension renfermant le liant, les fibres et le dérivé de la silice, puis séchage et frittage et élimination du dérivé de la silice, par exemple par percolation de soude électrolytique ou directement en électrolyse.

On observe, selon l'invention, qu'il y a rétention pratiquement totale, c'est à dire d'au moins 75 % des particules de latex, et avantageusement de 90 % de ces particules.

3

EXEMPLE 1 :

FABRICATION DE COUCHES DE FIBRES, CONSOLIDEES PAR UN LATEX DE PTFE, EN PRESENCE DE SILICE

Cet exemple a pour but de montrer l'effet de la silice comme agent de formation du réseau de latex.

On met en oeuvre comparativement du carbonate de calcium naturel, de l'alumine et une silice précipitée de granulométries semblables (inférieure à 50 micromètres).

A* Exemples comparatifs : couches déposées à base de fibres d'amiante

-Préparation de la suspension de départ :

$$
\left.
\begin{array}{lll}
- \ H_2O & = \ 3 \ 300 \ g \\
\text{Amiante chrysotile 1 à 5 mm} & = \quad 50 \ g \\
\text{Amiante chrysotile inférieure à 1 mm} & = \quad 50 \ g \\
\text{Dioctylsulfosuccinate de Na} & = \quad\quad 1 \ g
\end{array}
\right\}
\begin{array}{l}
\text{agitation} \\
\text{rotative} \\
1/2 \ h
\end{array}
$$

$$
\left.
\begin{array}{lll}
- \ \text{Porogène} & = \quad 25 \ g \\
\text{PTFE} \quad \text{(sous forme de latex} & = 80 \ \text{à} \ 20 \ g \\
\quad\quad\quad \text{à 60 \% d'extrait sec)}
\end{array}
\right\}
\begin{array}{l}
\text{agitation} \\
\text{rotative} \\
1/2 \ h
\end{array}
$$

- Repos 48 heures et réagitation avant utilisation.

- Préparation du diaphagrame par dépôt, sous vide programmé, de 460 g de suspension sur une toile d'amiante ; essorage sous 8.10$^{-4}$ Pascal ; séchage à 100°C et frittage par passage au four 7 minutes à 360°C.

Les taux d'arrêt du latex de PTFE mesurés sur ces éléments avant élimination du porogène sont donnés dans le tableau ci-dessous :

TABLEAU 1

| Nature du porogène | Carbonate calcium < 50 µm | | | Alumine < 50 µm | | | Silice < 50 µm | | |
|---|---|---|---|---|---|---|---|---|---|
| Rapport PTFE / Amiante dans la suspension | 0,8 | 0,4 | 0,2 | 0,8 | 0,4 | 0,2 | 0,8 | 0,4 | 0,2 |
| Rapport PTFE / Amiante dans la couche déposée | 0,37 à 0,75 | 0,15 à 0,37 | 0,08 à 0,16 | 0,15 à 0,60 | 0,12 à 0,36 | 0,07 à 0,16 | ≥0,77 | ≥0,38 | ≥0,18 |
| Taux d'arrêt | 0,46 à 0,94 | 0,38 à 0,93 | 0,40 à 0,80 | 0,19 à 0,75 | 0,30 à 0,90 | 0,35 à 0,80 | ≥0,96 | ≥0,95 | ≥0,90 |

EP 0 222 671 B1

B* Exemples comparatifs : couches déposées à base de fibres de graphite

- Préparation de la suspension :

```
- H₂O adoucie                    =  7 000 g  ⎤  agitation
- Bourre de graphite broyé       =    100 g  ⎥  rotative
                                             ⎦  30 min

- PTFE sous forme de latex       =     80 g  ⎤  agitation
     à 60 % d'extrait sec                    ⎥
- Silice précipitée 1                        ⎥  rotative
     (diamètre 3 micromètres     =    100 g  ⎥
     surface BET 250 m²/g)                   ⎦  30 min
```

- Dépôt sur toile d'amiante :

Après repos de 48 heures, la suspension est réagitée avant filtration dans les mêmes conditions que dans l'exemple 1 A.

On mesure la consolidation après élimination du porogène par dissolution de la silice par écoulement de la soude électrolytique à 70° C pendant une nuit.

| Fibres de graphite | Rapport Silice / Graphite | Rapport PTFE/graphite dans Suspension | dépôt | Consolidation après 360°C |
|---|---|---|---|---|
| Fibres de carbone | 1,0 | 0,80 | 0,60 | bonne |
| Broyées 1,0-2,0 mm | 0 | 0,80 | <0,05 | nulle |

EXEMPLE 2 :

INFLUENCE DE LA STRUCTURE DES SILICES SUR LE TAUX D'ARRET

Le taux d'arrêt du latex de PTFE dans la couche déposée, dépend sensiblement, à la fois de la surface spécifique et du diamètre moyen des particules de silice.

Le taux d'arrêt, mesuré lors de fabrications identiques à celle décrite dans l'exemple 1 A, est donné ci-

dessous :

| Nature de la silice | Diamètre "COULTER" en micromètres | Surface BET $m^2/g$ | Taux d'arrêt en % |
|---|---|---|---|
| Silice pyrogénée | 1,5 - 2 | 200 | 97 - 98 |
| Silice précipitée 1 | 3 | 250 | 97 - 98 |
| Silice précipitée 2 | 3 | 180 | 90 |
| Silice précipitée 3 | 9 | 250 | 92 |
| Silice précipitée 4 | 50 | 250 | 75 |

EXEMPLE 3 :

VITESSE DE DISSOLUTION DU POROGENE EN MILIEU ALCALIN

Lorsque l'élimination du porogène est réalisée en milieu alcalin, la solubilisation des silices est rapide alors que celle des alumines est longue et incomplète.

Exemples comparatifs Silice - Alumine

Dissolution de 1 g de porogène, traité préalablement 1 heure à 360° C, par la soude électrolytique (300 ml - 70° C - sous agitation)

| Nature du porogène | Pourcentage dissous | Temps de dissolution |
|---|---|---|
| Alumine | 50 % | 6 heures |
| Silice précipitée | 100 % | 15 minutes |
| Silice précipitée 1 | 100 % | 15 minutes |
| Silice précipitée 2 | 100 % | 15 minutes |
| Silice précipitée 3 | 100 % | 15 minutes |
| Silice précipitée 4 | 100 % | 15 minutes |

EXEMPLE 4 :

7

DIAPHRAGMES MICROPOREUX ET PERFORMANCE EN ELECTROLYSE

La réalisation de la suspension et du dépôt est faite selon l'exemple 1.

Après décollage de la toile d'amiante, utilisée comme support de filtration, le porogène est éliminé par écoulement de soude électrolytique pendant une nuit à 70°C. Le séparateur est alors monté en électrolyse.

A. La cellule d'électrolyse , utilisée pour la mesure des performances, a les caractéristiques et les conditions de fonctionnement ci-après :

- anode en métal déployé de titane revêtu de $RuO_2$ - $TiO_2$.
- Cathode en fer tressé laminé, fils de 2 mm, ouverture de 2 mm.
- Distance interélectrode de 7 mm.
- Surface active de 1/2 $dm^2$ - cellule type filtre-presse
- Densité de courant : 25 A/$dm^2$.
- Température : 85°C.
- Fonctionnement à $Cl^-$ anodique constant : 4,8 Mol/l.
- Soude produite : 200g/l

B* Performances obtenues pour trois types de diaphragmes .

Type A : celui décrit dans l'exemple de 1A.    PTFE = 20   $SiO_2$ = 25

Type B : enrichi en PTFE                        PTFE = 30   $SiO_2$ = 25

Type C : utilisation d'$Al_2O_3$                PTFE = 80   $Al_2O_3$ = 40

| Type | Rapport PTFE/Ambiante (P/A) | | Performances en électrolyse | | |
| --- | --- | --- | --- | --- | --- |
| | Suspension | Diaphragme | U | RF % | Kwh/tonne Cl |
| A | 0,20 | 0,18 - 0,19 | 3,40 | 85 | 3 020 |
| B | 0,30 | 0,28 - 0,29 | 3,55 | 86 | 3 120 |
| C | 0,80 | 0,15 - 0,25 | 3,40 à 3,60 | 84 à 87 | 3 050 à 3 125 |

Ces résultats ne montrent pas d'écarts de performances très significatifs. Il mettent toutefois en lumière l'intérêt de la silice par rapport à l'alumine, comme porogène :

- le taux d'arrêt irrégulier obtenu avec l'alumine ne permet pas de contrôler parfaitement le pourcentage de PTFE contenu dans la couche déposée et rend l'hydrophilie et les performances irrégulières. Dans la même gamme de polymère fluoré contenu, la silice autorise au contraire une excellente maîtrise de la composition du diaphragme et une très bonne régularité des performances.
- La déconsolidation des couches déposées se manifestant dès que le rapport PTFE/Amiante tombe en dessous de 0,15, il est impossible d'abaisser ce rapport en dessous de 0,80 dans la suspension si l'on utilise l'alumine comme porogène. Dans ces conditions, la perte en PTFE atteint 80 %. Pour des questions économiques, le recyclage des filtrats devient indispensable, avec tous les problèmes que cela implique (réajustement des suspensions.... alourdissement des appareillages....) Dans le cas de la silice, l'arrêt est presque total et la petitesse des pertes en PTFE aboutit à des filtrats très peu chargés dont le recyclage n'est plus économiquement justifié.

EXEMPLE 5 :

UTILISATION DE LA SILICE POUR LA FABRICATION DES DIAPHRAGMES A PRECATHODE INTEGREE

Il s'agit du dépôt d'un diaphragme microporeux, non conducteur, tel que décrit ci-dessus dans l'exemple 4, sur un élément cathodique comprenant une structure rigide conductrice de l'électricité - en fait, la cathode proprement dite - recouverte d'une couche également déposée et activée, jouant le rôle de cathode volumique, dite "précathode intégrée". Cette technique permet d'obtenir des performances améliorées de façon significative lorsque la silice est employée dans la réalisation de la précathode. Elle permet en effet de mieux consolider la couche de fibres conductrices, tout en diminuant la consommation de latex de PTFE. Il devient même possible d'éviter l'addition de fibres d'amiante dans l'électrode volumique et d'augmenter le pourcentage d'activateur sans nuire à la qualité de la suspension.

A* Exemples comparatifs : diaphragmes à précathode intégrée avec et sans silice

- L'élément "précathodique" utilisé est obtenu à partir d'une cathode en fer tressé et laminé et d'une suspension de type I, II, III, IV.

| Nature de la suspension | Type I | Type II | Type III | Type IV |
|---|---|---|---|---|
| $H_2O$ | 7 000 g | 7 000 g | 7 000 g | 7 000 g |
| Amiante chrysotile 1 à 5 mm | 37 g | 0 g | 30 g | 0 g |
| Graphite fibres 1 à 2 mm | 63 g | 100 g | 70 g | 100 g |
| Dioctylsulfosuccinate Na | 1 g | 1 g | 1 g | 1 g |
| PTFE (sous forme de latex à 60 % d'extrait sec) | 80 g | 80 g | 35 g | 35 g |
| Silice précipitée n°1 | 0 g | 0 g | 100 g | 100 g |
| Activateur NiAl | 135 g | 135 g | 235 g | 235 g |

- Les taux d'arrêt du PTFE dans la couche précathodique sont résumés dans le tableau ci-dessous :

| TYPES | Type I | Type II | Type III | Type IV |
|---|---|---|---|---|
| Taux d'arrêt PTFE en % | 15 à 25 % | < 5 % | 90 - 95 % | 80 - 90 % |

Comme dans le cas des diaphragmes microporeux l'avantage de la silice apparaît très clairement et permet là aussi d'éviter le recyclage des filtrats. Avec le type II la consolidation est nulle et interdit toute utilisation en électrolyse.

- L'addition de la silice facilite non seulement le fabrication mais aussi les performances en électrolyse. Les résultats obtenus à partir de diaphragmes à précathode intégrée (Types I, III, IV) le montrent aisément :

| Ø à précathode intégrée | | | | | Performances en électrolyse (cas ex. 4) | | | | | |
| Précathode | | | Diaphragme | | $Cl^-$a. | NaOH | $U_{I \to o}$ | U | RF | kWh/ tonne $Cl_2$ |
| Type | kg/m² | P/A | Po/A | kg/m² | Mol/l | g/l | Volts | Volts | % | |
| I | 0,5 | 0,8 | 0,40* | 1,5 | 4,8 | 200 | 2,26 ±0,02 | 3,35 | 87± 1 | 2 907 |
| III | 0,7 | 0,2 | 0,25** | 1,5 | 4,8 | 200 | 2,19 ±0,02 | 3,20 | 87 ±1 | 2 778 |
| IV | 0,7 | 0,2 | 0,25** | 1,5 | 4,8 | 200 | 2,19 ±0,02 | 3,20 | 87 ±1 | 2 778 |

- <u>Porogène utilisé</u> :　* $Al_2O_3$ inférieur à 50 micromètres

　　　　** Silice précipitée n°1.

- P/A　　= rapport PTFE/Fibres

Po/A　= rapport Porogène/Amiante.

- $U_{I \to o}$　= tension d'électrolyse à 85°C et I = 0 par extrapolation de la courbe　U = f (I)

## Revendications

1. Procédé d'obtention d'un matériau microporeux qui comprend la consolidation d'une structure fibreuse avec un liant à base d'un latex comprenant des particules d'un polymère fluoré et d'un dérivé à base de silice précipitée ou de combustion ayant une surface spécifique BET comprise entre 100 et 300 m2/g et une granulométrie comprise entre 1 et 50 micromètres pour développer le réseau dudit liant à base de latex.

2. Procédé selon la revendication 1 caractérisé en ce qu'il comprend en outre la formation d'une nappe par filtration sous vide d'une suspension renfermant des fibres, un liant à base de latex comprenant des particules d'un polymère fluoré et d'un dérivé à base de silice précipitée ou de combustion ayant une surface spécifique BET comprise entre 100 et 300 m2/g et une granulométrie comprise entre 1 et 50 micromètres suivie de son séchage et de son frittage.

3. Procédé selon la revendication 1 ou 2 caractérisé en ce que la silice à une granulométrie comprise entre 1 et 15 micromètres.

4. Procédé selon l'une quelconque des revendications précédentes caractérisé en ce que le liant à base de latex comprend de 30 à 70 % de particules solides de polymère fluoré dont la granulométrie est comprise entre 0,1 et 5 micromètres.

5. Procédé selon l'une quelconque des revendications précédentes caractérisé en ce que la structure fibreuse comprend des fibres conductrices de l'électricité.

6. Procédé selon l'une quelconque des revendications précédentes caractérisé en ce que la structure fibreuse comprend des fibres non conductrices de l'électricité.

7. Procédé selon la revendication 5, caractérisé en ce que les fibres conductrices sont des fibres de carbone présentant une distribution monodispersée de leurs longueurs.

8. Procédé selon l'une quelconque des revendications précédentes caractérisé en ce qu'il comprend en outre le développement de la microporosité du matériau par l'élimination de la silice par attaque alcaline.

9. Procédé selon l'une quelconque des revendications 2 à 8 caractérisé en ce que la filtration est réalisée sur un substrat rigide perforé.


## Claims

1. Process for obtaining a microporous material, which comprises the consolidation of a fibrous structure with a binder based on a latex comprising particles of a fluoropolymer and of a derivative based on precipitated or pyrogenic silica which has a BET specific surface area of between 100 and 300 $m^2$ g and a particle size of between 1 and 50 micrometres to develop the lattice of the said latex-based binder.

2. Process according to Claim 1, characterized in that it additionally comprises the formation of a sheet by vacuum filtration of a suspension containing fibres, a binder based on a latex comprising particles of a fluoropolymer and of a derivative based on precipitated or pyrogenic silica which has a BET specific surface area of between 100 and 300 $m^2$ g and a particle size of between 1 and 50 micrometres, followed by its drying and its sintering.

3. Process according to Claim 1 or 2, characterized in that the silica has a particle size of between 1 and 15 micrometres.

4. Process according to any one of the preceding claims, characterized in that the latex-based binder comprises from 30 to 70% of solid particles of fluoropolymer whose particle size is between 0.1 and 5 micrometres.

5. Process according to any one of the preceding claims, characterized in that the fibrous structure comprises electrically conductive fibres.

6. Process according to any one of the preceding claims, characterized in that the fibrous structure comprises electrically nonconductive fibres.

7. Process according to Claim 5, characterized in that the conductive fibres are carbon fibres exhibiting a monodisperse distribution of their lengths.

8. Process according to any one of the preceding claims, characterized in that it additionally comprises the development of the microporosity of the material by the removal of silica by alkaline etching.

9. Process according to any one of Claims 2 to 8, characterized in that the filtration is carried out on a perforated rigid substrate.


**Ansprüche**

1. Verfahren zur Herstellung eines mikroporösen Werkstoffs, das die Verfestigung einer Faserstruktur mit einem Bindemittel auf der Basis eines Latex umfaßt, der Teilchen eines fluorierten Polymeren und einer Verbindung auf Basis von gefällter oder pyrogener Kieselsäure enthält, die eine spezifische Oberfläche BET von 100 bis 300 m²/g und eine Korngrößenverteilung von 1 bis 50 $\mu$m aufweist, um das Netzwerk des Bindemittels auf Latexbasis zu entwickeln.

2. Verfahren nach Anspruch 1, dadurch gekennzeichnet, daß es weiterhin die Bildung einer Matte durch Vakuumfiltration einer Suspension, umfassend Fasern, ein Bindemittel auf Latexbasis, das Teilchen eines fluorierten Polymeren und einer Verbindung auf der Basis von gefällter oder pyrogener Kieselsäure enthält, die eine spezifische Oberfläche BET von 100 bis 300 m² /g und eine Korngrößenverteilung von 1 bis 50 $\mu$m aufweist, anschließendes Trocknen und Sintern vorsieht.

3. Verfahren nach Anspruch 1 oder 2, dadurch gekennzeichnet, daß die Kieselsäure eine Korngrößenverteilung im Bereich von 1 bis 15 $\mu$m aufweist.

4. Verfahren nach einem der vorangehenden Ansprüche, dadurch gekennzeichnet, daß das Bindemittel auf Latexbasis 30 bis 70 % Feststoffteilchen eines fluorierten Polymeren enthält, deren Korngrößenverteilung im Bereich von 0,1 bis 5 $\mu$m liegt.

5. Verfahren nach einem der vorangehenden Ansprüche, dadurch gekennzeichnet, daß die Faserstruktur elektrisch leitende Fasern umfaßt,

6. Verfahren nach einem der vorangehenden Ansprüche, dadurch gekennzeichnet, daß die Faserstruktur elektrisch nicht leitende Fasern umfaßt.

7. Verfahren nach Anspruch 5, dadurch gekennzeichnet, daß die leitenden Fasern Kohlenstoff-Fasern sind, die eine monodisperse Verteilung ihrer Längen aufweisen.

8. Verfahren nach einem der vorangehenden Ansprüche, dadurch gekennzeichnet, daß es weiterhin die Entwicklung der Mikroporosität des Werkstoffes durch Entfernen der Kieselsäure mittels alkalischem Angriff umfaßt.

9. Verfahren nach einem der Ansprüche 2 bis 8, dadurch gekennzeichnet, daß die Filtration auf einem perforierten starren Substrat ausgeführt wird.